# EUROPÄISCHE PATENTANMELDUNG

(11) **EP 4 309 872 A1**
(43) Veröffentlichungstag der Anmeldung: **24.01.2024**
(21) Anmeldenummer: 23183286.6
(22) Anmeldetag: 04.07.2023
(51) Int. Cl.: B29C 48/36, B29C 48/70

(54) **DÜSENADAPTER, DÜSENADAPTERSYSTEM, DÜSENSYSTEM, EXTRUDERSYSTEM SOWIE FOLGEANLAGE**

(30) Priorität: 22.07.2022 DE 102022118442
(71) Anmelder: Brückner Maschinenbau GmbH, 83313 Siegsdorf (DE)
(72) Erfinder: Imping, Wolfgang, 42897 Remscheid - Lennep (DE)
(74) Vertreter: Flach Bauer & Partner Patentanwälte mbB

(57) **Zusammenfassung**

Ein Düsenadapter (18) für eine Folgeanlage (10), insbesondere eine Folienanlage oder eine Folienreckanlage hat einen Einlasskanal (26), einen Auslasskanal (34), einen Ringspalt (28) und einen Zentralkanal (32), wobei der Einlasskanal (26) in den Ringspalt (28) mündet. Der Ringspalt (28) erstreckt sich entlang des Zentralkanals (32) und der Ringspalt (28) umgibt den Zentralkanal (32). Der Ringspalt (28) und der Zentralkanal (32) enden in einem Umkehrbereich (30) und der Zentralkanal (32) und der Ringspalt (28) sind im Umkehrbereich (30) miteinander verbunden sind. Der Zentralkanal (32) mündet anschließend in den Auslasskanal (34).

Ferner sind ein Düsenadaptersystem (66), ein Düsensystem (17), ein Extrudersystem (12) und eine Folgeanlage (10) gezeigt.

## Beschreibung

Die Erfindung betrifft einen Düsenadapter für eine Folgeanlage, ein Extrudersystem für eine Folgeanlage sowie eine Folgeanlage, wie eine Folienanlage oder eine Folienreckanlage. Ebenfalls betrifft die Erfindung ein Düsenadaptersystem.

Zur Herstellung von orientierten Folien kommen Folienreckanlagen zum Einsatz. Diese sind üblicherweise mit einem Extrudersystem ausgestattet, das mittels eines Extruders eine Kunststoffschmelze erzeugt. Die Kunststoffschmelze wird durch eine Düse auf eine Kühlwalze aufgebracht, um einen Film zu erzeugen. Von der Gussmasse ausgehend wird der erzeugte Film dann zu einer Folie verarbeitet, welche anschließend mono- oder biaxial verstreckt wird.

Folgeanlagen, wie Folienreckanlagen laufen üblicherweise im Dauerbetrieb, so dass der Extruder, im Gegensatz zu beispielsweise Spritzgussanlage, einen kontinuierlichen Schmelzfluss bereitstellt.

Üblicherweise befindet sich der Extruder in der Horizontalen und die Düse in der Vertikalrichtung, so dass ein Düsenadapter benötigt wird, der den Schmelzfluss in einem Winkel von 90° umlenkt.

Zur Herstellung hochqualitativer Folien ist es notwendig, dass die Kunststoffschmelze äußerst homogen ist. Hierzu ist es bekannt, Filterelemente und Mischer zu verwenden, die dem Düsenadapter vor- bzw. nachgeschaltet sind. Hierdurch wird jedoch der Strömungsweg der bereits funktionalisierten Kunststoffschmelze verlängert, was sich nachteilig auf die Qualität der Kunststoffschmelze auswirkt.

Zudem sind zum Wechsel zwischen verschiedenen Funktionen große Umbauten am Extrudersystem vorzunehmen, um die entsprechenden Funktionsteile auswechseln zu können.

Es ist daher Aufgabe der Erfindung, einen Düsenadapter, ein Extrudersystem, ein Düsenadaptersystem sowie eine Folgeanlage bereitzustellen, bei denen die Homogenität der Kunststoffschmelze verbessert wird, ohne dass größere Umbauten notwendig sind oder eine signifikante Verlängerung des Strömungswegs der Kunststoffschmelze erfolgt.

Die Aufgabe wird gelöst durch einen Düsenadapter für eine Folgeanlage, wie eine Folienanlage oder eine Folienreckanlage. Der Düsenadapter hat einen Einlasskanal, einen Auslasskanal, einen Ringspalt und einen Zentralkanal, wobei der Einlasskanal in den Ringspalt mündet. Der Ringspalt erstreckt sich entlang zumindest eines Endabschnitts des Zentralkanals und umgibt den Endabschnitt des Zentralkanals sowohl in axialer Richtung als auch in Umfangsrichtung zumindest teilweise. Der Ringspalt und der Endabschnitt des Zentralkanals enden in einem Umkehrbereich, und der Endabschnitt und der Ringspalt sind im Umkehrbereich miteinander verbunden. Der Zentralkanal mündet in den Auslasskanal.

Durch den Umkehrbereich, der den Zentralkanal mit dem Ringspalt verbindet, wird die Kunststoffschmelze bereits innerhalb des Düsenadapters allein durch die Umkehrung stärker vermischt. Dadurch verbessert sich die Qualität, ohne den Strömungsweg der Kunststoffschmelze signifikant zu verlängern oder das zusätzliche Funktionsbauteile einzubauen sind.

Insbesondere umgibt der Ringspalt den Endabschnitt vollständig in Umfangsrichtung und/oder vollständig in axialer Richtung.

Der Düsenadapter ist für einen kontinuierlichen Schmelzefluss einer Kunststoffschmelze ausgebildet.

Der Düsenadapter eignet sich insbesondere für beliebige Ausformungen von Halbzeugen (Profile, Rohren, Filamente, etc.). Obwohl die folgende Beschreibung den erfindungsgemäßen Düsenadapter im Einsatz in Folienreckanlagen beschreibt, gelten die Ausführungen jedoch für den Einsatz des Düsenadapters mit allen formgebenden Düsen und den zugeordneten Folgeanlagen.

In einem Aspekt verläuft ein Strömungsweg für die Kunststoffschmelze vom Einlasskanal in den Ringspalt, anschließend über den Umkehrbereich in den Zentralkanal und schließlich in den Auslasskanal, wobei der Strömungsweg im Umkehrbereich seine Richtung um mehr als 90°, insbesondere um mehr als 160°, bevorzugt um 180° ändert. Hierdurch wird die Homogenität der Kunststoffschmelze weiter verbessert.

Der durch den Düsenadapter gestaltete Strömungsweg kann auch in umgekehrter Richtung durchflossen werden, wenn es dem Ziel der Homogenitätsverbesserung und dem Zufluss zur Gestalt bildenden Düse verbessernd und zuträglich ist. Auch die Lage des Düsenadapters kann in der räumlichen Lage jeweils in +/- 90° dem jeweiligen Anlagenkonzept angepasst werden.

Um die Durchmischung weiter zu verbessern, kann der Zentralkanal konzentrisch mit dem Ringspalt ausgebildet sein und/oder mit dem Auslasskanal fluchten.

In einer Ausgestaltung schließt der Einlasskanal einen Winkel von wenigstens 45°, insbesondere von 90° mit dem Ringspalt ein und/oder schleißt einen Winkel von wenigstens 45°, insbesondere von 90° mit dem Auslasskanal ein. Hierdurch erfährt der Strömungsweg eine Richtungsänderung von wenigstens 135°, insbesondere von 270°, wodurch die Durchmischung der Kunststoffschmelze noch weiter verbessert wird.

Die Winkelangaben beziehen sich insbesondere auf die Mittelachsen der jeweiligen Kanäle, des Ringspalts oder des Hohlraums.

Zur weiteren Verbesserung der Qualität der Kunststoffschmelze kann im Zentralkanal und/oder im Ringspalt wenigstens ein Filterelement angeordnet sein.

In einer Ausführungsform weist der Düsenadapter einen dynamischen Mischer auf, der insbesondere im Ringspalt angeordnet ist. Durch einen dynamischen Mischer kann die Durchmischung an die Eigenschaften der Kunststoffschmelze angepasst werden.

In einer Ausgestaltung ist im Zentralkanal ein statischer Mischer angeordnet, insbesondere wobei der statische Mischer Teil des Funktionsabschnitts ist oder im Funktionsabschnitt befestigt ist. Der statische Mischer erhöht die Durchmischung bei geringen Kosten.

Der statische Mischer ist insbesondere zumindest teilweise im Endabschnitt angeordnet.

In einer Ausgestaltung weist der Düsenadapter einen Grundkörper und einen Funktionskörper auf, der insbesondere am Grundkörper austauschbar befestigt ist. Im Grundkörper ist ein Hohlraum und der Einlasskanal ausgebildet, der in den Hohlraum mündet. Der Funktionskörper weist einen Funktionsabschnitt auf, in dem zumindest der Endabschnitt des Zentralkanals ausgebildet ist, wobei sich der Funktionsabschnitt in den Hohlraum erstreckt und der Ringspalt radial zwischen dem Funktionsabschnitt und einer radialen Wandung des Hohlraums ausgebildet ist. Durch die Trennung von Grundkörper und Funktionskörper kann die Funktionalität des Düsenadapters ohne aufwändige Umbauten verändert werden.

Insbesondere ist der Funktionskörper ein vom Grundkörper separates Bauteil.

Der Umkehrbereich kann zwischen dem axialen Ende des Funktionsabschnitts und der axialen Wandung des Hohlraums ausgebildet sein.

Zur einfachen und sicheren Verbindung zwischen dem Grundkörper und dem Funktionskörper kann der Grundkörper eine Befestigungsöffnung aufweisen, die in den Hohlraum mündet, und der Funktionskörper kann einen Befestigungsabschnitt aufweisen, der in die Befestigungsöffnung eingreift und diese verschließt, wobei sich der Funktionsabschnitt vom Befestigungsabschnitt aus erstreckt.

In einer Ausgestaltung kann der Funktionskörper einen Düsenabschnitt aufweisen, der sich vom Befestigungsabschnitt aus vom Grundkörper weg erstreckt, wobei im Düsenabschnitt der Auslasskanal ausgebildet ist. Auf diese Weise lässt sich der Auslasskanal einfach zur Düse führen.

In einer Ausführungsform sind im Funktionsabschnitt mehrere radiale Öffnungen ausgebildet, die den Ringspalt mit dem Zentralkanal strömungstechnisch verbinden, wodurch die Durchmischung weiter vergrößert wird.

Um die Kunststoffschmelze zu filtern, ohne den Strömungsweg zu verlängern, kann der Funktionsabschnitt als Filter ausgebildet sein, insbesondere als Filterkerze, und/oder der Funktionsabschnitt ist starr und ein Filtermaterial ist am Funktionsabschnitt befestigt, insbesondere ist ein Filterstrumpf über den Funktionsabschnitt gezogen.

Die radialen Öffnungen können Filteröffnungen sein.

In einer Ausführungsform ist im Ringspalt ein Mischrohr angeordnet, das gegenüber der radialen Wandung des Hohlraums und/oder dem Funktionsabschnitt drehbar gelagert ist, insbesondere wobei das Mischrohr, die radiale Wandung und/oder der Funktionsabschnitt wenigstens eine Vertiefung und/oder wenigstens einen Vorsprung aufweisen. Auf diese Weise wird im Ringspalt ein dynamischer Mischer bereitgestellt.

Das Mischrohr kann mittels eines Antriebs angetrieben werden.

Ferner wird die Aufgabe gelöst durch ein Düsenadaptersystem mit einem Düsenadapter wie zuvor beschrieben, der einen Grundkörper und einen ersten Funktionskörper aufweist, sowie wenigstens einem weiteren Funktionskörper, wobei der weitere Funktionskörper anstelle des ersten Funktionskörpers am Grundkörper befestigbar ist.

Die zum Düsenadapter genannten Merkmale und Vorteile finden sich gleichermaßen beim Düsenadaptersystem und umgekehrt.

Insbesondere sind der erste und der weitere Funktionskörper unterschiedlich ausgeführt und/oder haben unterschiedliche Funktionen.

Ferner wird die Aufgabe gelöst durch ein Düsensystem mit einem Düsenadapter wie zuvor beschrieben und einer formgebenden Düse, insbesondere einer Breitschlitzdüse, einer Rohrdüse, einer Blasdüse, einer Filamentdüse oder einer Profildüse, wobei die Düse am Düsenadapter befestigt ist.

Die zum Düsenadapter und/oder zum Düsenadaptersystem genannten Merkmale und Vorteile finden sich gleichermaßen beim Düsensystem und umgekehrt.

Die Aufgabe wird ferner gelöst durch ein Extrudersystem für eine Folgeanlage, mit einem Extruder, einer Düse und einem Düsenadapter wie zuvor beschrieben oder einem Düsensystem wie zuvor beschrieben, wobei der Einlasskanal des Düsenadapters mit dem Extruder und der Auslasskanal des Düsenadapters mit der Düse strömungstechnisch verbunden ist.

Die zum Düsenadapter, Düsensystem und/oder zum Düsenadaptersystem genannten Merkmale und Vorteile finden sich gleichermaßen beim Extrudersystem und umgekehrt.

Das Extrudersystem ist zur Bereitstellung eines kontinuierlichen Schmelzflusses der Kunststoffschmelze ausgebildet.

Der Einlasskanal und der Auslasskanal sind mittelbar oder unmittelbar strömungstechnisch mit dem Extruder bzw. der Düse verbunden.

Die Aufgabe wird auch gelöst durch eine Folgeanlage, wie eine Folienanlage oder eine Folienreckanlage mit einem Extrudersystem wie zuvor beschrieben.

Die zum Düsenadapter, zum Düsenadaptersystem, zum Düsensystem und/oder zum Extrudersystem genannten Merkmale und Vorteile finden sich gleichermaßen bei der Folgeanlage und umgekehrt.

Weitere Merkmale und Vorteile der Erfindung ergeben sich aus der nachfolgenden Beschreibung sowie aus den beigefügten Zeichnungen, auf die Bezug genommen wird. In den Zeichnungen zeigen:
- Figur 1 ein Teil einer erfindungsgemäßen Folgeanlage mit einem erfindungsgemäßen Extrudersystem mit einem erfindungsgemäßen Düsenadapter in schematischer Darstellung,
- Figur 2 den Düsenadapter gemäß Figur 1 einzeln in einer Schnittansicht,
- Figuren 3, 4 einen Grundkörper bzw. einen Funktionskörper des Düsenadapters gemäß Figur 2 jeweils einzeln im Schnitt,
- Figur 5 einen Düsenadapter gemäß einer zweiten Ausführungsform der Erfindung teilweise im Schnitt,
- Figur 6 einen Düsenadapter gemäß einer dritten Ausführungsform der Erfindung teilweise im Schnitt,
- Figur 7 einen Düsenadapter gemäß einer vierten Ausführungsform der Erfindung teilweise im Schnitt,
- Figur 8 einen Düsenadapter gemäß einer fünften Ausführungsform der Erfindung teilweise im Schnitt, und
- Figur 9 ein erfindungsgemäßes Düsenadaptersystem mit einem Düsenadapter gemäß Figur 2 im Schnitt.

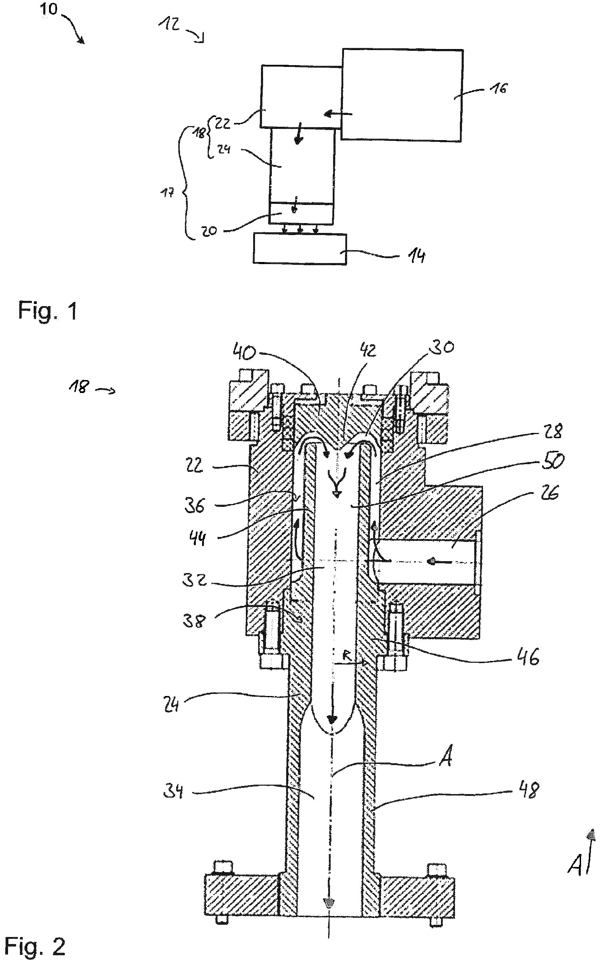

In Figur 1 ist schematisch eine Folgeanlage 10, hier eine Folienreckanlage, gemäß der Erfindung teilweise dargestellt. Die Folgeanlage 10 umfasst ein Extrudersystem 12, eine Kühlwalze 14 sowie nicht gezeigte Vorrichtungen zum Längs-, Quer- und/oder Simultanrecken des auf die Kühlwalze 14 aufgebrachten Films.

Das Extrudersystem 12 dient zur Bereitstellung eines kontinuierlichen Flusses einer Kunststoffschmelze und umfasst beispielsweise einen Extruder 16 und ein Düsensystem 17 mit einem erfindungsgemäßen Düsenadapter 18 und einer Düse 20.

Wie mittels der Pfeile dargestellt, stellt der Extruder 16 kontinuierlich einen Fluss einer Kunststoffschmelze bereit, die durch den Düsenadapter 18 in die Düse 20 strömt.

Die Düse 20 ist eine formgebende Düse und erzeugt einen Film, der auf die Kühlwalze 14 aufgebracht wird.

Die Düse 20 ist zum Beispiel eine Breitschlitzdüse, eine Rohrdüse, eine Blasdüse, eine Filamentdüse oder eine Profildüse.

Auf der Kühlwalze 14 kühlt der Film ab und wird von dort zu den Vorrichtungen zum Längs-, Quer- und/oder Simultanrecken weitertransportiert. Die Weiterverarbeitung erfolgt in an sich bekannter Weise.

Der Düsenadapter 18 ist am Extruder 16 befestigt und die Düse 20 wiederum ist am Düsenadapter 18 befestigt.

In Figur 2 ist der Düsenadapter 18 einzeln im Schnitt dargestellt.

Der Düsenadapter 18 weist einen Grundkörper 22 und einen vom Grundkörper 22 separaten Funktionskörper 24 auf, wobei im Düsenadapter 18 ein Einlasskanal 26, ein Ringspalt 28, ein Umkehrbereich 30, ein Zentralkanal 32 und ein Auslasskanal 34 ausgebildet sind.

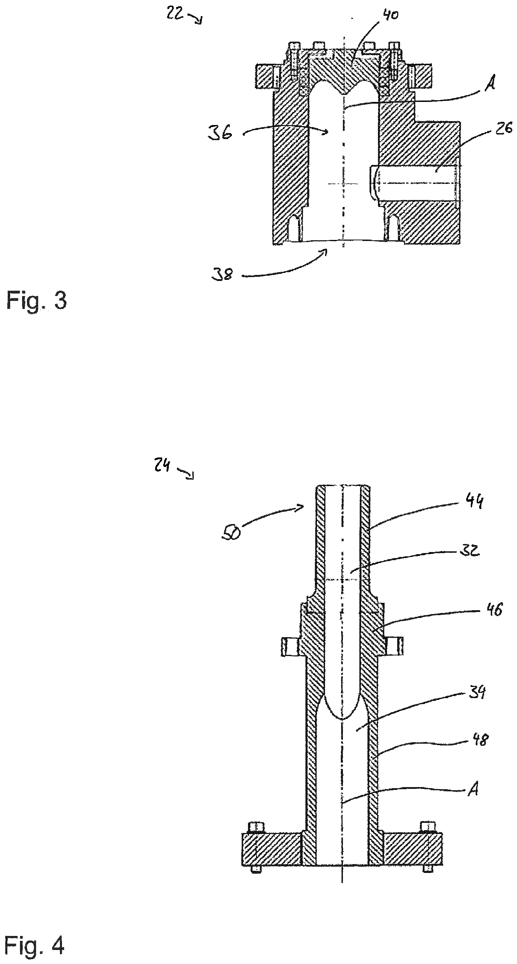

Der Grundkörper 22 und der Funktionskörper 24 sind einzeln in Figur 3 bzw. 4 dargestellt.

Im Grundkörper 22 ist der Einlasskanal 26 sowie ein Hohlraum 36 ausgeformt.

Der Hohlraum 36 erstreckt sich entlang einer axialen Richtung A des Grundkörpers 22 und des Düsenadapters 18. Trotz der Verwendung der Begrifflichkeiten "Axialrichtung", "Radialrichtung" und dergleichen muss der Grundkörper 22 nicht zylindrisch sein. Die Bezeichnungen dienen lediglich der vereinfachten Beschreibung.

Der Hohlraum 36 ist beispielsweise zylindrisch, insbesondere kreiszylindrisch ausgebildet und die Wandungen des Hohlraum 36 in radialer Richtung sind insbesondere zylindrisch.

An einem axialen Ende des Grundkörpers 22 ist der Hohlraum 36 durch eine Befestigungsöffnung 38 eröffnet.

Die Befestigungsöffnung 38 hat beispielsweise einen größeren Durchmesser als der Hohlraum 36.

Der Hohlraum 36 kann als vollständige Durchgangsbohrung durch den Grundkörper 22 in Axialrichtung A ausgebildet sein und somit auch eine Öffnung in Axialrichtung A haben, die entgegengesetzt zur Befestigungsöffnung 38 liegt. Diese Öffnung kann durch einen Deckel 40 verschlossen sein, der dem Grundkörper 22 zuzurechnen ist.

In Axialrichtung wird der Hohlraum 36 somit durch eine axiale Wandung begrenzt, die auch am Deckel 40 vorgesehen sein kann.

Die axiale Wandung kann einen konischen Fortsatz 42 aufweisen, der sich axial in den Hohlraum 36 erstreckt.

In Axialrichtung A ist der Hohlraum 36 somit nur durch die Befestigungsöffnung 38 geöffnet.

Der Einlasskanal 26 erstreckt sich in radialer Richtung von außen durch den Grundkörper 22 bis in den Hohlraum 36.

Der Hohlraum 36 und der Einlasskanal 26 erstrecken sich somit im gezeigten Ausführungsbeispiel senkrecht zueinander. Denkbar sind jedoch auch andere Winkel, wie ein Winkel zwischen dem Einlasskanal 26 und dem Hohlraum 36 von wenigstens 45°.

Die Winkelangaben beziehen sich auf die Mittelachse der jeweiligen Kanäle 26, 32, 34, des Hohlraums 36 oder des Ringspalt 28.

Der Funktionskörper 24 hat einen Funktionsabschnitt 44, einen Befestigungsabschnitt 46 sowie einen Düsenabschnitt 48.

Der Befestigungsabschnitt 46 hat eine äußere Kontur, die zur Kontur der Befestigungsöffnung 38 des Grundkörpers 22 komplementär ist.

Zudem kann am Befestigungsabschnitt 46 ein Flansch vorgesehen sein, mittels dem der Funktionskörper 24 am Grundkörper 22 austauschbar befestigt werden kann.

Vom Befestigungsabschnitt 46 ausgehend erstreckt sich in Axialrichtung A der Funktionsabschnitt 44.

Der Funktionsabschnitt 44 ist hohl ausgebildet und weist den Zentralkanal 32 auf.

Im gezeigten Ausführungsbeispiel ist der Funktionsabschnitt 44 ein Hohlzylinder, insbesondere mit kreisförmigem Querschnitt. Zum Beispiel hat der Funktionsabschnitt 44 einen Außendurchmesser, der geringer ist als der Innendurchmesser des Hohlraums 36.

Auch der im Funktionsabschnitt 44 vorgesehene Zentralkanal 32 kann zylindrisch, insbesondere kreiszylindrisch ausgebildet sein.

An seinem von dem Befestigungsabschnitt 46 abgewandten Ende weist der Funktionsabschnitt 44 bzw. der Zentralkanal 32 einen Endabschnitt 50 auf. Der Endabschnitt 50 ist in Axialrichtung A nach außen geöffnet.

Der Düsenabschnitt 48 erstreckt sich vom Befestigungsabschnitt 46 ebenfalls in Axialrichtung A jedoch in entgegengesetzte Richtung zum Funktionsabschnitt 44.

Im Düsenabschnitt 48 ist der Auslasskanal 34 ausgebildet, der am vom Befestigungsabschnitt 46 abgewandten Ende nach außen mündet.

An diesem Ende kann ebenfalls ein Flansch vorgesehen sein, um den Funktionskörper 24 bzw. den gesamten Düsenadapter 18 mit der Düse 20 zu verbinden.

Der Zentralkanal 32 geht in den Auslasskanal 34 innerhalb des Funktionskörpers 24 über, beispielsweise im Befestigungsabschnitt 46 oder im Düsenabschnitt 48.

Zum Beispiel ist der Zentralkanal 32 konzentrisch mit dem Auslasskanal 34 ausgebildet und fluchtet daher mit diesem.

Im montierten Zustand des Düsenadapters 18 ist der Funktionskörper 24 am Grundkörper 22 derart befestigt, dass der Befestigungsabschnitt 46 des Funktionskörpers 24 in die Befestigungsöffnung 38 des Grundkörpers 22 eingreift und die Befestigungsöffnung 38 somit verschließt.

Der Hohlraum 36 ist nun in beide axialen Richtungen A begrenzt und der Funktionsabschnitt 44 des Funktionskörpers 24 erstreckt sich in den Hohlraum 36 hinein.

In Axialrichtung A ist die Länge des Funktionsabschnittes 44 derart gewählt, dass der Funktionsabschnitt 44 kürzer ist als der Hohlraum 36, also ein Abstand zwischen der axialen Wandung des Hohlraums 36 und dem Funktionskörper 24 bestehen bleibt. Dieser Abstand bildet den Umkehrbereich 30. Der konische Fortsatz 42 ist im Umkehrbereich 30 vorgesehen und kann sich in den Endabschnitt 50 hinein erstrecken.

In radialer Richtung R ist der Funktionsabschnitt 44, insbesondere der Endabschnitt 50 von der radialen Wandung des Hohlraums 36 beabstandet, wodurch der Ringspalt 28 des Düsenadapters 18 gebildet wird.

Der Ringspalt 28 umgibt den Endabschnitt 50 in Umfangsrichtung vollständig und auch in Axialrichtung A vollständig, d.h. er erstreckt sich in Axialrichtung A vollständig entlang des Endabschnitts 50. Der Zentralkanal 32 und der Ringspalt 28 sind auch konzentrisch ausgebildet.

Der Ringspalt 28 sowie der Endabschnitt 50 enden bzw. münden in den Umkehrbereich 30. Der Zentralkanal 32, insbesondere der Endabschnitt 50 ist mit dem Ringspalt 28 mittels des Umkehrbereichs 30 strömungstechnisch verbunden.

Der Einlasskanal 26 ist derart platziert, dass er in den Ringspalt 28 mündet, insbesondere an einem der Befestigungsöffnung 38 zugewandten axialen Ende des Ringspalts 28. Mit anderen Worten erstreckt sich der Ringspalt 28 von der Mündung des Einlasskanals 26 in axialer Richtung A von der Befestigungsöffnung 38 und vom Auslasskanal 34 weg.

Durch den Winkel des Einlasskanals 26 mit dem Hohlraum 36 schließt auch der Einlasskanal 26 mit dem Ringspalt 28 den gleichen Winkel ein, also einen Winkel von wenigstens 45°, insbesondere von 90°.

Auch mit dem Auslasskanal 34 schließt der Einlasskanal 26 einen Winkel von wenigstens 45°, insbesondere von 90° ein, beispielsweise jedoch mit anderem Drehsinn als der Winkel zwischen dem Einlasskanal 26 und dem Ringspalt 28.

Zum Betrieb wird der Düsenadapter 18 am Extruder 16 montiert, so dass der Einlasskanal 26 mit dem Auslass des Extruders 16 verbunden ist.

Die Düse 20 wird am Düsenadapter 18 angebracht, so dass der Auslasskanal 34 mit einem Einlass der Düse 20 verbunden ist.

Die Verbindungen können dabei unmittelbar vorgesehen sein. Denkbar ist jedoch auch eine mittelbare Verbindung, beispielsweise wenn ein Filter zwischen dem Extruder 16 und dem Düsenadapter 18 vorgesehen ist.

Der Extruder 16 stellt einen kontinuierlichen Schmelzfluss einer Kunststoffschmelze bereit, die über den Einlasskanal 26 in den Düsenadapter 18 eintritt.

Durch den Einlasskanal 26, den Ringspalt 28, den Umkehrbereich 30, den Zentralkanal 32 und schließlich den Auslasskanal 34 ist ein Strömungsweg für die Kunststoffschmelze im Düsenadapter 18 definiert, der in Figur 2 durch Pfeile angedeutet ist.

Der Strömungsweg verläuft vom Einlasskanal 26 zunächst in den Ringspalt 28.

Aufgrund des Winkels zwischen dem Einlasskanal 26 und dem Ringspalt 28 erfährt der Strömungsweg eine Richtungsänderung von zumindest 45°, insbesondere von 90°.

Anschließend verläuft der Strömungsweg durch den Ringspalt 28 in den Umkehrbereich 30, wo er durch die axiale Wandung des Hohlraums 36 und insbesondere durch den konischen Fortsatz 42 um 180° gewendet wird.

Denkbar ist auch, dass die Richtungsänderung zumindest mehr als 90°, insbesondere wenigstens 160° beträgt.

Aus dem Umkehrbereich 30 verläuft der Strömungsweg dann in den Endabschnitt 50 des Zentralkanals 32, durchläuft den Zentralkanal 32, und tritt anschließend in den Auslasskanal 34 ein. Am Ende des Auslasskanals 34 tritt der Strömungsweg und somit die Kunststoffschmelze vom Düsenadapter 18 in die Düse 20 über.

Der Strömungsweg somit die Kunststoffschmelze erfährt durch den Düsenadapter 18 eine Richtungsänderung im gezeigten Ausführungsbeispiel von 270°, jedoch von wenigstens 135°. Hierdurch wird die Kunststoffschmelze stark durchmischt, wodurch die Homogenität deutlich verbessert wird. Gleichzeitig wird der Laufweg der Kunststoffschmelze nach Funktionalisierung im Extruder 16 nur geringfügig verlängert, so dass die Qualität der Kunststoffschmelze nicht verringert wird.

Ebenfalls hat der Düsenadapter 18 den Vorteil, dass bei einem Stillstand der Folgeanlage 10, also des Extruders 16, keine Luft und somit Sauerstoff zum Extruder 16 gelangen kann. Dies ist darauf zurückzuführen, dass beim Stillstand die Kunststoffschmelze zwar nahezu vollständig aus dem Auslasskanal 34 und dem Zentralkanal 32 hinausläuft, die Kunststoffschmelze jedoch im Ringspalt 28 und im Einlasskanal 26 verbleibt.

Der Ringspalt 28 und der Einlasskanal 26 bleiben somit stets gefüllt und verhindern Kontakt von Luft mit Extruder 16 zuverlässig.

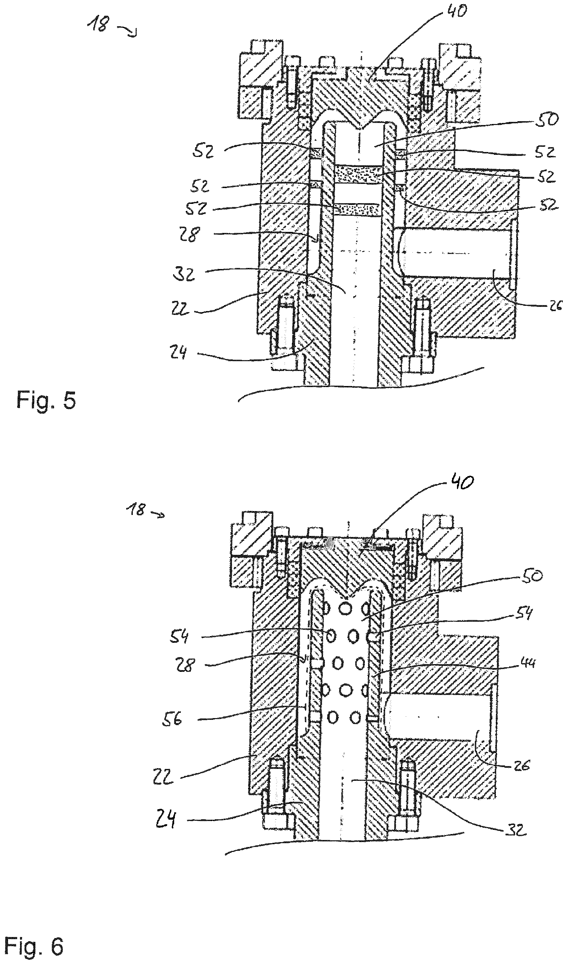

In den Figuren 5, 6, 7 und 8 sind weitere Ausführungsformen des erfinderischen Düsenadapters 18 in jeweils einem detaillierten Schnitt dargestellt, die im Wesentlichen der ersten Ausführungsform entsprechen. Im Folgenden wird daher lediglich auf die Unterschiede eingegangen und gleiche und funktionsgleiche Teile sind mit denselben Bezugszeichen versehen.

Die in Figur 5 gezeigte zweite erfindungsgemäße Ausführungsform des Düsenadapters 18 unterscheidet sich von der ersten Ausführungsform dadurch, dass im Zentralkanal 32 und im Ringspalt 28 wenigstens ein Filterelement 52 angeordnet ist. Auch ist es denkbar, dass das wenigstens eine Filterelement 52 auch nur im Zentralkanal 32 oder nur im Ringspalt 28 angeordnet ist.

Das Filterelement 52 im Zentralkanal 32 ist beispielsweise ein Tellerfilter und erstreckt sich über den gesamten Durchmesser des Zentralkanals 32.

Das Filterelement 52 ist am Funktionsabschnitt 44 befestigt, insbesondere im Endabschnitt 50.

Das Filterelement 52 im Ringspalt kann ebenfalls am Funktionsabschnitt 44 angebracht sein, beispielsweise an der radialen Außenwand des Funktionsabschnitts 44. In diesem Fall ist das Filterelement 52 ringförmig.

Im dritten Ausführungsbeispiel des Düsenadapters 18, das in Figur 6 dargestellt ist, sind im Funktionsabschnitt 44 des Funktionskörpers 24 mehrere radiale Öffnungen 54 ausgebildet.

Diese radialen Öffnungen 54 erstrecken sich durch die Wandung des Funktionsabschnitts 44 und verbinden somit den Zentralkanal 32, insbesondere den Endabschnitt 50, mit dem Ringspalt 28 strömungstechnisch.

Durch die radialen Öffnungen 54 wird die Durchmischung der Kunststoffschmelze auf dem Strömungsweg durch den Düsenadapter 18 weiter verbessert.

Denkbar ist auch, dass die radialen Öffnungen 54 als Filteröffnungen ausgebildet sind, so dass der Funktionsabschnitt 44 selber als Filter dient.

Möglich ist auch, dass der Funktionsabschnitt 44 starr ist und ein Filtermaterial 56 in Form eines Filterstrumpfs (in Figur 6 gestrichelt dargestellt) über den Funktionsabschnitt 44 gezogen ist, und somit die axiale Öffnung des Endabschnitts 50 sowie die radialen Öffnungen 54 bedeckt.

In diesem Fall kann der Funktionsabschnitt 44 ohne radiale Öffnungen 54 ausgebildet sein.

Weiterhin ist es denkbar, dass der Funktionsabschnitt 44 selbst als Filterkerze ausgebildet ist.

Durch die Filter in der zweiten Ausführungsform und der dritten Ausführungsform gewinnt der Düsenadapter 18 zudem an einer Filterfunktion, wodurch die Qualität der Kunststoffschmelze, die aus dem Düsenadapter 18 austritt, weiter verbessert wird.

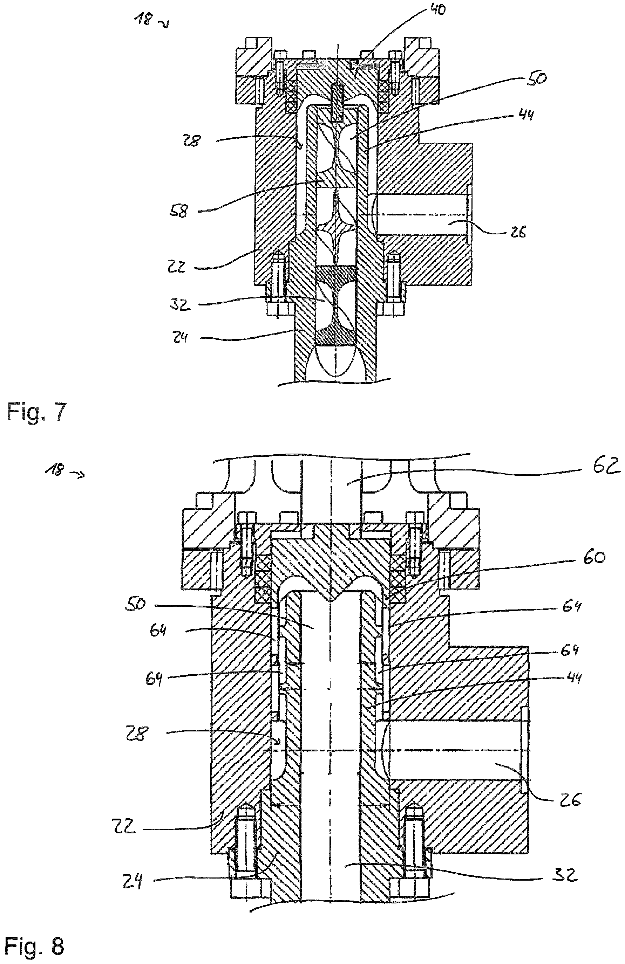

In Figur 7 ist eine vierte Ausführungsform des Düsenadapters 18 dargestellt.

In der vierten Ausführungsform ist im Zentralkanal 32, insbesondere im Endabschnitt 50, ein statischer Mischer 58 vorgesehen. Der statische Mischer 58 ist insbesondere fest im Funktionsabschnitt 44 befestigt oder ist bereits einstückig als Teil des Funktionsabschnitts 44 ausgebildet.

Der statische Mischer 58 befindet sich innerhalb des Strömungswegs und führt zu einer weiteren Durchmischung der Kunststoffschmelze. Dies ermöglicht eine weitere Homogenisierung der Kunststoffschmelze und somit einem weiteren Qualitätsgewinn.

Im fünften Ausführungsbeispiel gemäß Figur 8 weist der Düsenadapter 18 einen dynamischen Mischer auf.

Der dynamische Mischer wirkt im Ringspalt 28 und umfasst ein Mischrohr 60, eine Antriebswelle 62 und einen nicht dargestellten Antrieb.

Das Mischrohr 60 ist an einem seiner axialen Enden geschlossen und erstreckt sich von oben, also von der Befestigungsöffnung 38 entgegengesetzten Seite in den Hohlraum 36 hinein. Hierzu ersetzt das Mischrohr 60 den Deckel 40, der in dieser Ausführungsform nicht notwendig ist.

An der geschlossenen, axialen Stirnseite ist die Antriebswelle 62 angebracht, die vom Antrieb angetrieben wird.

Das Mischrohr 60 ist konzentrisch zum Funktionsabschnitt 44, d.h. konzentrisch zum Ringspalt 28 und zum Zentralkanal 32 angeordnet.

Das Mischrohr 60 ist im Hohlraum 36 drehbar, d.h. gegenüber dem Grundkörper 22 und dem Funktionskörper 24, insbesondere dem Funktionsabschnitt 44 drehbar gelagert.

Zur Vermischung wirkt das Mischrohr 60 mit dem Funktionsabschnitt 44, genauer gesagt der radial äußeren Wandung des Funktionsabschnittes 44 zusammen.

An der radialen Außenseite der Wandung des Funktionsabschnitts 44 ist wenigstens eine Vertiefung 64 vorgesehen. Im in Figur 8 gezeigten Ausführungsbeispiel sind mehrere Vertiefungen 64 ausgebildet.

Die Vertiefungen 64 erstrecken sich sowohl in Axialrichtung A als auch in Umfangsrichtung, jedoch überwiegt die Komponente in Axialrichtung A.

Auch das Mischrohr 60 weist wenigstens eine Vertiefung 64 auf, hier in Form von vollständigen Durchbrüchen in seiner radialen Wandung.

Die Vertiefungen 64 des Mischrohrs 60 erstrecken sich ebenfalls in Axialrichtung A und Umfangsrichtung, wobei auch hier die Komponente in Axialrichtung A überwiegt. Die Komponente in Umfangsrichtung ist jedoch derjenigen der Vertiefungen 64 des Funktionsabschnitts 44 entgegengesetzt.

Im gezeigten Ausführungsbeispiel ist die radiale Wandung des Hohlraum 36 ohne Vertiefungen oder Vorsprünge ausgebildet.

Es ist denkbar, dass nicht nur Vertiefungen 64, sondern auch Vorsprünge am Funktionsabschnitt 44 bzw. Mischrohr 60 vorgesehen sind.

Ebenfalls kann die radiale Wandung des Hohlraum 36 wenigstens eine Vertiefung 64 oder Vorsprung aufweisen. In diesem Falle könnte auf die Vorsprünge und Vertiefungen 64 im Funktionsabschnitt 44 verzichtet werden. Jedoch hat ein solcher Grundkörper eine schlechtere Funktionalität mit anderen Funktionskörpern 24.

Während des Betriebs des Extrudersystems 12, d.h. wenn die Kunststoffschmelze durch den Ringspalt 28 fließt, wird der dynamische Mischer betrieben. Hierzu wird über den Antrieb und die Antriebswelle 62 das Mischrohr 60 gegenüber dem Funktionsabschnitt 44 gedreht. Dadurch kommt es im Ringspalt 28 zu einer weiteren Vermischung der Kunststoffschmelze, wodurch die Qualität der Kunststoffschmelze weiter erhöht wird.

Die Merkmale der zweiten, dritten, vierten und fünften Ausführungsform können nahezu beliebig miteinander kombiniert werden. Beispielsweise können sowohl Filterelemente 52 als auch ein statischer Mischer 58 im Düsenadapter 18 vorgesehen sein.

In den verschiedenen Ausführungsformen ist der Grundkörper 22 stets identisch ausgebildet, wobei gegebenenfalls der Deckel 40 durch das Mischrohr 60 auszutauschen ist.

Die verschiedenen Funktionen des Düsenadapters 18 in den verschiedenen Ausführungsformen werden somit lediglich durch den Funktionskörper 24 bereitgestellt.

Der Funktionskörper 24 ist austauschbar am Grundkörper 22 befestigt, so dass der Düsenadapter 18 multifunktional ist. Dies bedeutet, dass der Düsenadapter 18 durch Austausch lediglich des Funktionskörpers 24 verschiedene Funktionen durchführen kann, um auf den jeweils speziellen Anwendungsbereich, insbesondere auf die Materialeigenschaften der verwendeten Kunststoffschmelze, angepasst zu werden.

Es können somit verschiedene Funktionskörper 24 mit einem einzigen Grundkörper 22 verwendet werden, wodurch ein multifunktionales Düsenadaptersystem 66 bereitgestellt wird.

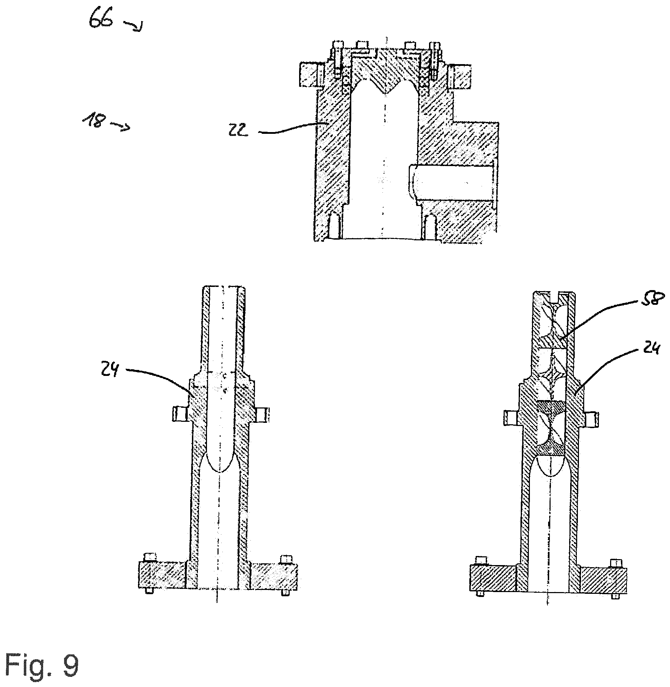

Ein erfindungsgemäßes Düsenadaptersystem 66 ist in Figur 9 dargestellt. Das Düsenadaptersystem 66 weist den Grundkörper 22 auf und zumindest zwei der Funktionskörper 24 der ersten, zweiten, dritten, vierten oder fünften Ausführungsform.

Das Düsenadaptersystem 66 hat einen ersten Funktionskörper 24, der zusammen mit dem Grundkörper 22 einen Düsenadapter 18 bildet, aber auch einen weiteren Funktionskörper 24. Der weitere Funktionskörper 24 kann anstelle des ersten Funktionskörpers 24 am Grundkörper 22 befestigt werden, so dass der Grundkörper 22 und der weitere Funktionskörper 24 einen Düsenadapter 18 bilden, der nun eine andere Funktion hat.

Auf diese Weise wird ein modulares und multifunktionales Düsenadaptersystem 66 bereitgestellt, das Rüstzeiten verringert.

## Patentansprüche

1. Düsenadapter für eine Folgeanlage (10), insbesondere eine Folienanlage oder eine Folienreckanlage mit einem Einlasskanal (26), einem Auslasskanal (34), einem Ringspalt (28) und einem Zentralkanal (32),
wobei der Einlasskanal (26) in den Ringspalt (28) mündet,
wobei sich der Ringspalt (28) entlang zumindest eines Endabschnitts (50) des Zentralkanals (32) erstreckt und der Ringspalt (28) den Endabschnitt (50) des Zentralkanals (32) sowohl in axialer Richtung (A) als auch in Umfangsrichtung zumindest teilweise umgibt,
wobei der Ringspalt (28) und der Endabschnitt (50) des Zentralkanals (32) in einem Umkehrbereich (30) enden und der Endabschnitt (50) und der Ringspalt (28) im Umkehrbereich (30) miteinander verbunden sind, und
wobei der Zentralkanal (32) in den Auslasskanal (34) mündet.

2. Düsenadapter nach Anspruch 1, **dadurch gekennzeichnet, dass** ein Strömungsweg für eine Kunststoffschmelze vom Einlasskanal (26) in den Ringspalt (28), anschließend über den Umkehrbereich (30) in den Zentralkanal (32) und schließlich in den Auslasskanal (34) verläuft, wobei der Strömungsweg im Umkehrbereich (30) seine Richtung um mehr als 90°, insbesondere um mehr als 160°, bevorzugt um 180° ändert.

3. Düsenadapter nach Anspruch 1 oder 2, **dadurch gekennzeichnet, dass** der Zentralkanal (32) konzentrisch mit dem Ringspalt (28) ausgebildet ist und/oder mit dem Auslasskanal (34) fluchtet.

4. Düsenadapter nach einem der vorhergehenden Ansprüche, **dadurch gekennzeichnet, dass** der Einlasskanal (26) einen Winkel von wenigstens 45°, insbesondere von 90° mit dem Ringspalt (28) einschließt und/oder einen Winkel von wenigstens 45°, insbesondere von 90° mit dem Auslasskanal (34) einschließt.

5. Düsenadapter nach einem der vorhergehenden Ansprüche, **dadurch gekennzeichnet, dass** im Zentralkanal (32) und/oder im Ringspalt (28) wenigstens ein Filterelement (52) angeordnet ist.

6. Düsenadapter nach einem der vorhergehenden Ansprüche, **dadurch gekennzeichnet, dass** der Düsenadapter (18) einen dynamischen Mischer aufweist, der insbesondere im Ringspalt (28) angeordnet ist.

7. Düsenadapter nach einem der vorhergehenden Ansprüche, **dadurch gekennzeichnet, dass** im Zentralkanal (32) ein statischer Mischer (58) angeordnet ist, insbesondere wobei der statische Mischer (58) Teil des Funktionsabschnitts (44) ist oder im Funktionsabschnitt (44) befestigt ist.

8. Düsenadapter nach einem der vorhergehenden Ansprüche, **dadurch gekennzeichnet, dass** der Düsenadapter (18) einen Grundkörper (22) und einen Funktionskörper (24) aufweist, der insbesondere am Grundkörper (22) austauschbar befestigt ist,
wobei im Grundkörper (22) ein Hohlraum (36) und der Einlasskanal (26) ausgebildet sind, der in den Hohlraum (36) mündet,
wobei der Funktionskörper (24) einen Funktionsabschnitt (44) aufweist, in dem zumindest der Endabschnitt (50) des Zentralkanals (32) ausgebildet ist, wobei sich der Funktionsabschnitt (44) in den Hohlraum (36) erstreckt und der Ringspalt (28) radial zwischen dem Funktionsabschnitt (44) und einer radialen Wandung des Hohlraums (36) ausgebildet ist.

9. Düsenadapter nach Anspruch 8, **dadurch gekennzeichnet, dass** der Grundkörper (22) eine Befestigungsöffnung (38) aufweist, die in den Hohlraum (36) mündet, und der Funktionskörper (24) einen Befestigungsabschnitt (46) aufweist, der in die Befestigungsöffnung (38) eingreift und diese verschließt, wobei sich der Funktionsabschnitt (44) vom Befestigungsabschnitt (46) aus erstreckt, insbesondere wobei der Funktionskörper (24) einen Düsenabschnitt (48) aufweist, der sich vom Befestigungsabschnitt (46) aus vom Grundkörper (22) weg erstreckt, wobei im Düsenabschnitt (48) der Auslasskanal (34) ausgebildet ist.

10. Düsenadapter nach Anspruch 8 oder 9, **dadurch gekennzeichnet, dass** im Funktionsabschnitt (44) mehrere radiale Öffnungen (54) ausgebildet sind, die den Ringspalt (28) mit dem Zentralkanal (32) strömungstechnisch verbinden,
insbesondere wobei der Funktionsabschnitt (44) als Filter ausgebildet ist, insbesondere als Filterkerze, und/oder wobei der Funktionsabschnitt (44) starr ist und ein Filtermaterial (56) am Funktionsabschnitt (44) befestigt ist, insbesondere ein Filterstrumpf über den Funktionsabschnitt (44) gezogen ist.

11. Düsenadapter nach einem der Ansprüche 8 bis 10, **dadurch gekennzeichnet, dass** im Ringspalt (28) ein Mischrohr (60) angeordnet ist, das gegenüber der radialen Wandung des Hohlraums (36) und/oder dem Funktionsabschnitt (44) drehbar gelagert ist, insbesondere wobei das Mischrohr (60), die radiale Wandung und/oder der Funktionsabschnitt (44) wenigstens eine Vertiefung (64) und/oder wenigstens einen Vorsprung aufweist.

12. Düsenadaptersystem mit einem Düsenadapter (18) gemäß einem der Ansprüche 8 bis 11, der einen Grundkörper (22) und einen ersten Funktionskörper (24) aufweist, sowie wenigstens einem weiteren Funktionskörper (24), wobei der weitere Funktionskörper (24) anstelle des ersten Funktionskörpers (24) am Grundkörper (22) befestigbar ist.

13. Düsensystem mit einem Düsenadapter (18) nach einem der Ansprüche 1 bis 12 und einer formgebenden Düse (20), insbesondere einer Breitschlitzdüse, einer Rohrdüse, einer Blasdüse, einer Filamentdüse oder einer Profildüse, wobei die Düse (20) am Düsenadapter (18) befestigt ist.

14. Extrudersystem für eine Folgeanlage (10), insbesondere eine Folienanlage oder eine Folienreckanlage, mit einem Extruder (16), einer Düse (20) und einem Düsenadapter (18) gemäß einem der Ansprüche 1 bis 11 oder einem Düsensystem (17) gemäß Anspruch 13, wobei der Einlasskanal (26) des Düsenadapters (18) mit dem Extruder (16) und der Auslasskanal (34) des Düsenadapters (18) mit der Düse (20) strömungstechnisch verbunden ist.

15. Folgeanlage, insbesondere Folienanlage oder Folienreckanlage, mit einem Extrudersystem (12) gemäß Anspruch 14.
